# EUROPEAN PATENT SPECIFICATION

(11) **EP 0 159 362 B1**
(45) Date of publication and mention of the grant of the patent: **14.08.1996**
(21) Application number: 84903358.4
(22) Date of filing: 05.09.1984
(51) Int. Cl.: H04L 5/16

(54) **DATA TRANSMISSION SYSTEM**
DATENÜBERTRAGUNGSSYSTEM
SYSTEME DE TRANSMISSION DE DONNEES

(30) Priority: 05.09.1983 JP 163888/83
(43) Date of publication of application: 30.10.1985
(73) Proprietor: SONY CORPORATION, Tokyo 141 (JP)
(72) Inventor: ISHIHARA, Mitsugu Sony Corporation, Shinagawa-ku Tokyo 141 (JP); MACHIDA, Yukihiko Sony Corporation, Shinagawa-ku Tokyo 141 (JP)
(74) Representative: Cotter, Ivan John
(86) International application number: PCT/JP84/00425
(87) International publication number: WO 85/01168

(56) References cited:
- JP-A- 5 341 903
- JP-A-56 153 866
- PATENT ABSTRACTS OF JAPAN, vol. 5, no. 19 (E-44)[691], 4th February 1981; & JP- A-55 147 054 (NIPPON DENKI K.K.) 15-11-1980

## Description

### DATA COMMUNICATION APPARATUS

This invention relates to data communication apparatus, and more particularly to data communication apparatus in which bidirectional data communication is effected over a single signal line.

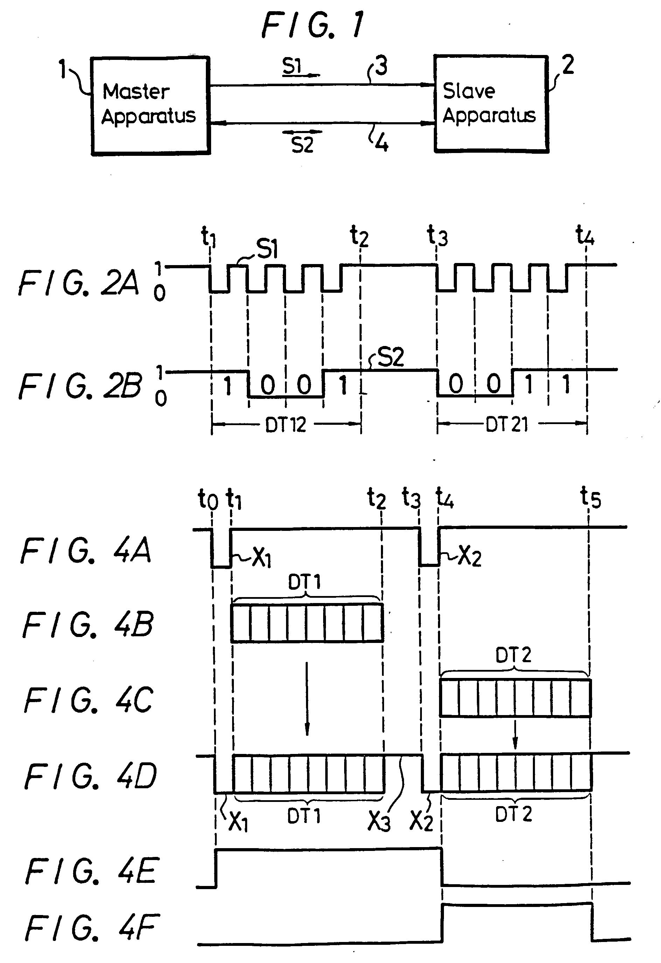

When a video signal picked up by, for example, a video camera is recorded by a video tape recorder (VTR), in order to operate these two apparatuses in synchronism with each other, if the VTR, for example, is used as a master apparatus and the video camera as a slave apparatus, data signals containing a control signal, a mode signal, an answer signal and the like must be interchanged therebetween. Thus, as shown in Figure 1, two signal lines 3 and 4 are generally interconnected between a master apparatus 1 and a slave apparatus 2. Then, through the first signal line 3, a clock signal S1 (Figure 2A) is transmitted from the master apparatus 1 to the slave apparatus 2 and in synchronism with this clock signal S1, a data signal S2 (Figure 2B) is transmitted. Thus, a data signal DT12 may be transmitted from the master apparatus 1 between time points t1 and t2, or in the reverse direction a data signal DT21 may be transmitted from the slave apparatus 2 between time points t3 and t4.

In order that the data signal S2 may be positively interchanged between the two apparatuses 1 and 2 without being dropped, it is important that while they are being operated in synchronism with each other by the common clock signal S1, the data are interchanged bit by bit therebetween so as to prevent the transmission and reception of the data signal S2 from being overlapped in time.

Japanese patent specification JP-A-53/41903 discloses a data communication apparatus having the features of the preamble of claim 1.

According to the present invention there is provided a data communication apparatus as claimed in claim 1.

The invention will now be further described by way of example with reference to the accompanying drawings, in which:
Figure 1 is a block diagram of an example of a prior art data communication apparatus;
Figure 2 is a waveform diagram thereof;
Figure 3 is a block diagram of an embodiment of data communication apparatus according to this invention;
Figures 4 and 5 are timing charts thereof;
Figures 6 to 8 are timing charts for explaining another embodiment of this invention; and
Figures 9 and 10 are flow charts for the embodiment of Figure 3.

Figure 3 illustrates an embodiment in which a VTR 10 is a master apparatus and a video camera 20 is a slave apparatus. The VTR 10 accommodates therein a microcomputer and comprises a communication control section 11 for carrying out the communication and other control operations, a video circuit and mechanical deck section 12, a function key section 13, a mode display section 14, a remote control function key section 15 for the video camera 20, and a transmitter-receiver 16.

The video camera 20 accommodates therein a microcomputer and comprises a communication control section 21 for carrying out the communication and other control operations, a video camera function key section 22, a remote control function key section 23 for remote controlling the VTR 10, a display section 24 capable of display within, for example, a viewfinder, and a transmitter-receiver 25. There is also a drive circuit 26 for a zoom motor 27.

A single communication line 30 is used to transmit control signals between the VTR 10 and the video camera 20.

The function key section 13 of the VTR 10 is provided with function keys such as a record mode key, a playback mode key, a pause mode key, a fast forward mode key, a rewind mode key and a stop mode key. When any one of these function keys is operated, the microcomputer of the control section 11 identifies the operated function key, which is then displayed on the display section 14. At the same time, the required control signal is supplied to the video circuit and deck section 12, by which the VTR is set in the mode corresponding to the operated function key.

The remote control function key section 23 of the video camera 20 is also provided with function keys such as a record mode key, a playback mode key, a pause mode key, a fast forward mode key, a rewind mode key and a stop mode key. When any one of these function keys is depressed, control data are transmitted through the line 30 to the VTR 10, in which these control data are latched in the register in the microcomputer of the control section 11. As a result, on the basis of the content of the data and the state of the key input of the function key section 13 of the VTR 10, the mode of the VTR 10 is determined, the determined mode is displayed on the display section 14, and the necessary control signal is supplied to the video circuit and deck section 12, thereby to place the VTR 10 in the determined mode. The reason why the mode of the VTR 10 is determined on the basis of the data transmitted from the video camera 20 and the state of the function key section 13 of the VTR 10 is to prevent mis-operation. For example, since the fast forward mode is not set while a recording is being made by the video camera, at this time, a fast forward mode command is ignored and the recording mode is continued. This operation is carried out by storing in the microcomputer data which determine the next mode of the VTR 10 relative to the combination of the remote control signal and the mode of the function key.

From the VTR 10, signal data indicative of the fact that the VTR 10 is placed in the determined mode are transmitted to the video camera 20, while the video camera 20 receives such signal data and then displays the mode of the VTR 10 in the display section 24 within the viewfinder.

The remote control function key section 15 of the VTR 10 for remote-controlling the video camera 20 includes function keys such as a focus key, an iris key, a zoom key, a pan key and a tilt key. For example, when the zoom key is operated, as will be described later, zooming data are transmitted through the line 30 from the VTR 10 to the video camera 20, in which the zooming data are latched in the register of the microcomputer of the control section 21, and the zooming data are supplied to the drive circuit 26 of the zoom motor 27, so the zooming operation is carried out.

In the video camera 20, if the function key section 22 is operated, the operation corresponding to the key operation is carried out by the video camera 20 on the basis of the signal from the microcomputer of the control section 21. For example, when the zoom key is operated in the video camera 20, a zooming operation is carried out.

The bidirectional communication is carried out through the single line 30 as follows.

The control section 11 of the VTR 10 is provided with a shift register 111 of, for example eight bits. An input terminal IN of the control section 11 is connected to the serial input terminal of the shift register 111, and the serial output terminal of the shift register 111 is connected through an AND gate 112 to an output terminal OUT of the control section 11. Between the shift register 111 and the data bus of the microcomputer, data are written and/or read in the form of parallel data.

The serial data are latched in and/or read out from the shift register 111 on the basis of a clock pulse produced from a clock generating circuit 113 which produces eight clock pulses when a start signal is produced from a start signal generating circuit 114.

The start signal from the start signal generating circuit 114 is supplied through the AND gate 112 to the output terminal OUT of the control section 11.

The output terminal OUT of the control section 11 is connected to an output amplifier 161 of the transmitter-receiver 16. The output terminal of the amplifier 161 is connected through a pull-up resistor 162 to, for example, a positive voltage source Vcc. Accordingly, when the amplifier 161 does not produce an output of logic "0", the level of the line 30 which is connected to the amplifier 161 through the resistor 162 is pulled up to logic "1".

To the amplifier 161, there is supplied a transmitting and receiving control signal RW1 from a terminal R/W of the control section 11. When the transmitting and receiving control signal RW1 is logic "1" in level, the VTR 10 is placed in the transmission mode and the amplifier 161 is set in the enable state, so that the amplifier 161 produces an output of a logic level corresponding to the change of the logic level of each bit of the data signal DT1 from the output terminal OUT of the control section 11, which is then transmitted to the line 30.

When, on the other hand, the transmitting and receiving control signal RW1 is logic "0" in level, the amplifier 161 is set in the state of producing no output and the output impedance thereof is at high level. Accordingly, if the logic level of the line 30 is changed, data indicative of such change are applied to the input terminal IN of the control section 11 as an input signal thereof.

The control section 21 of the video camera 20 is provided with a shift register 211 of eight bits for use in latching therein and transmitting the serial data. The serial input terminal of the shift register 211 is connected to an input terminal IN of the control section 21 and the serial output terminal thereof is connected to an output terminal OUT of the control section 21. Then, eight bit parallel data are interchanged between the shift register 211 and the data bus of the microcomputer.

The writing and/or reading of the serial data in and/or from the shift register 211 is carried out by a clock pulse generated from a clock generating circuit 212 which produces a clock pulse with a frequency the same as that of the clock pulse generated from the clock generating circuit 113 of the VTR 10. When the start signal transmitted from the VTR 10 is detected in a start signal detecting circuit 213, the clock generating circuit 212 produces eight clock pulses.

The line 30 is connected through the transmitter-receiver 25 to the input terminal IN of the control section 21 of the video camera 20. The transmitter-receiver 25 includes a switching transistor 251 connected between the line 30 and earth, and the base thereof is supplied with an output of an AND gate 253 through a resistor 252. To the AND gate 253, there is supplied a transmitting and receiving control signal RW2 from a terminal R/W of the control section 21. When the transmitting and receiving control signal RW2 is logic "1" in level, the AND gate 253 is opened, whereby the transmission data DT2 supplied thereto from the output terminal OUT through an inverter 254 are supplied through the AND gate 253 to the base of the transistor 251. When the logic level of the data DT2 is "0", the transistor 251 is turned on to allow the line 30 to become earth level, or logic "0" level. When, on the other hand, the data DT2 are logic "1" level, the transistor 251 is turned off so that the logic level of the line 30 becomes logic "1".

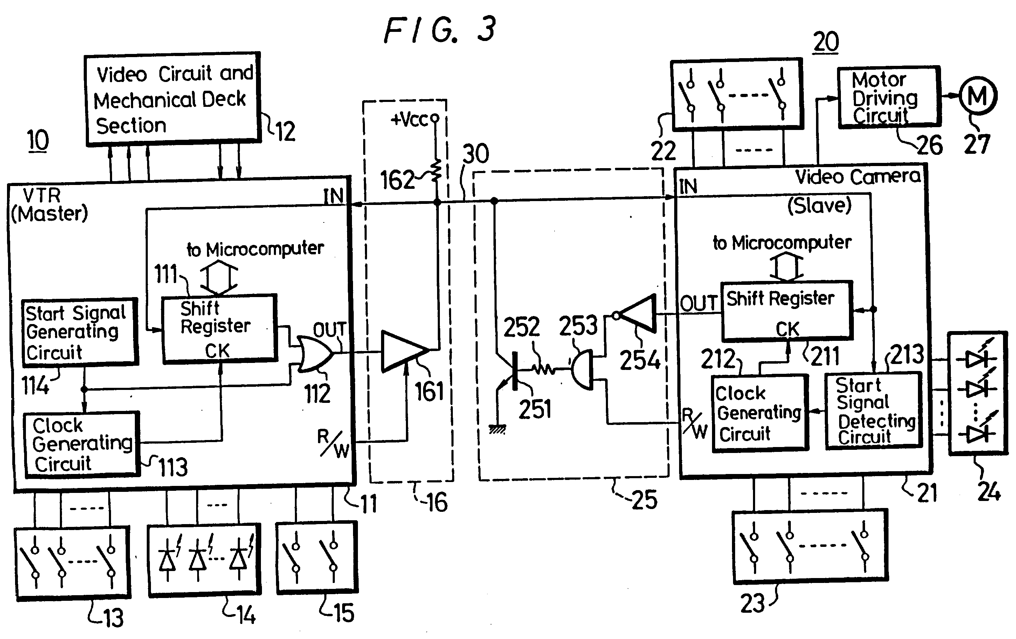

Bidirectional communication between the VTR 10 used as the master apparatus and the video camera 20 used as the slave apparatus is carried out as shown in Figure 5. A combination of the transmission period P1 for the data DT1 from the VTR 10 and the transmission period P2 for the data DT2 from the video camera 20 is arranged as one block, and this one block is cyclically repeated with a predetermined period. A start signal corresponding to one bit at the beginning of each of the transmission data DT1 and DT2 is produced from the VTR 10, and this start signal is transmitted to the video camera 20. On the basis of this start signal, the transmission and reception of data are carried out, or a data transmission of a start-stop synchronizing system is carried out.

In this case, in order to discriminate the transmission periods P1 and P2 of one block, and the transmission periods P1 and P2 of another block, a period T1 between the periods P1 and P2 of one block and a period T2 between the blocks are made different from each other, such as T1 < T2. The period T2 is expected to have a duration of time long enough for the data processing to be carried out in the VTR 10 and the video camera 20, and for the operations corresponding to the data to be carried out.

In the case of this embodiment, the first transmission period P1 is used as the transmission period of data from the VTR 10 and the second transmission period P2 is used as the transmission period of the data from the video camera 20. From the start signal generating circuit 114 of the VTR 10, there are repeatedly produced two start signals X1 and X2 at every predetermined cycle per block, respectively.

The communication of each one block is carried out as follows.

As shown in Figure 4A, from the start signal generating circuit 114 in the control section 11 of the VTR 10, there is produced the start signal X1 which falls to "0" for one bit interval from a time point t0, and at this time point t0 the transmitting and receiving control signal RW1 (Figure 4E) developed at the terminal R/W becomes of high level, so that the VTR 10 is set in the transmission mode. Then, at a time point tl one bit interval after the time point t0, since the start signal X1 rises, the clock generating circuit 113 produces sequentially eight clock pulses by which the transmission data DT1 of eight bits stored in the shift register 111 is read out therefrom. Together with the start signal X1, the data thus read out are transmitted through the AND gate 112 and the amplifier 161 to the line 30 (see Figure 4D).

At this time, since the transmitting and receiving control signal RW2 (Figure 4F) of the control section 21 of the video camera 20 is at low level, the video camera 20 is in the receiving mode, and hence the start signal X1 and the succeeding transmission data DT1 are applied through the input terminal IN to the control section 21. The start signal X1 is detected by the start signal detecting circuit 213, and from a time point at which the start signal X1 rises, eight clock pulses are sequentially produced from the clock generating circuit 212, so that on the basis of the eight clock pulses, the received data DT1 are written in the shift register 211.

The data DT1 latched in the shift register 211 are latched in the microcomputer through its data bus and hence a predetermined operation corresponding to the data is carried out.

When the latching operation of the data DT1 in the shift register 211 has ended, the transmission data DT2 of eight bits stored in another register are transferred to the shift register 211 in the form of parallel data so as to be transmitted from the video camera 20 to the VTR 10.

On the other hand, when the transmission of the data DT1 has ended at time point t2, from the output terminal OUT of the control section 11, an end signal X3 of a predetermined length (for example, two bits) and which is at logic "1" in level is transmitted through the amplifier 161 to the line 30, thereby to indicate that the transmission of data DT1 to the video camera 20 has ended. At time point t3 after the end signal X3, the start signal X2 which once again falls to logic "0" for one bit interval is produced from the start signal generating circuit 114 at the VTR 10 and then it is transmitted through the amplifier 161 to the line 30. Then, at time point t4 at which the transmission of the start signal X2 has ended, the transmitting and receiving control signal RW1 at the terminal R/W of the control section 11 of the VTR 10 becomes of low level, so that the VTR 10 is set in the receiving mode, while the transmitting and receiving control signal RW2 at the terminal R/W of the control section 21 of the video camera 20 becomes of high level, so that the video camera 20 is set in the transmitting mode.

Then, the start signal X2 is detected by the start signal detecting circuit 213 whereby from the time point t4, eight clock pulses are sequentially produced from the clock generating circuit 212. On the basis of the clock pulses, the transmission data DT2 stored in the shift register 211 are transmitted through the output terminal OUT and the transmitter-receiver 25 to the line 30.

Since at this time the VTR 10 is in the receiving mode as earlier noted, these data DT2 are applied through the input terminal IN to the control section 11. In this control section 11, when the second start pulse X2 is produced from the start signal generating circuit 114, from the time point t4 at which this start pulse X2 rises, eight clock pulses are sequentially produced from the clock generating circuit 113. On the basis of these clock pulses, the transmission data DT2 of eight bits from the video camera 20 are written in the shift register 111. Then, the data DT2 thus written are latched in the microcomputer through its data bus in the form of 8-bit parallel data, and are decoded to carry out the predetermined operation corresponding to the data.

In like manner, the transmission period of the VTR 10 and the transmission period of the video camera 20 are arranged as one block and this one block is periodically repeated.

The above-described operations will be executed in accordance with the following programs stored in the respective microcomputers of the VTR 10 and the video camera 20.

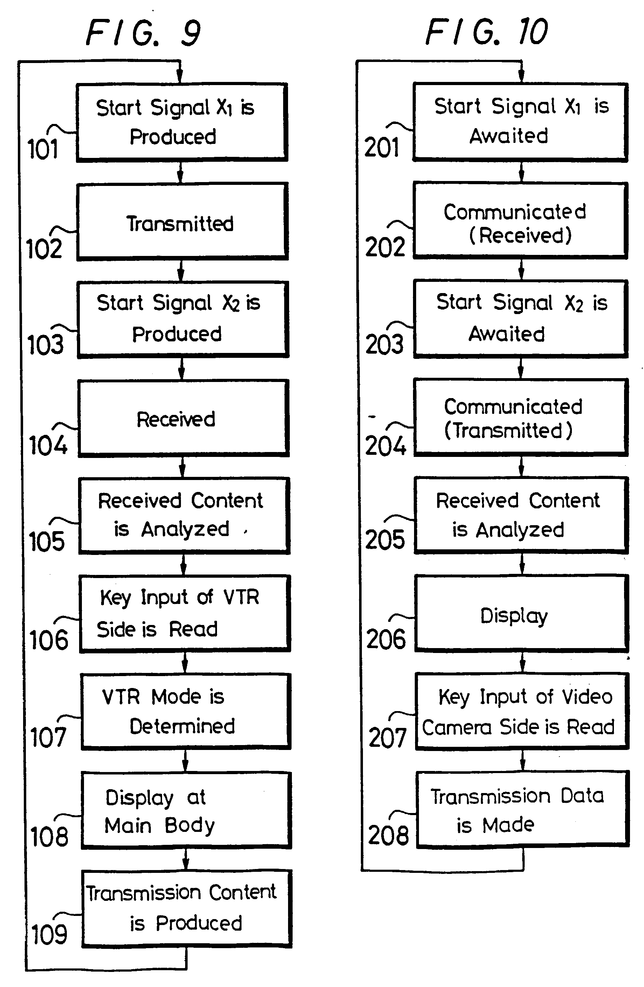

Figure 9 is a flow chart of a program for the VTR 10, in which steps 101 to 109 are repeated in turn. Steps 105 to 107 are steps in which as mentioned before, either of the command from the video camera 20 and the key operation in the VTR 10 is preferentially selected so as to determine the mode of the VTR 10 and prevent mis-operation.

In step 109 for generating the transmission content, in addition to the data corresponding to the key input operation at the VTR 10 and the data indicative of the mode of the VTR 10 set by the remote control signal from the video camera 20, when there are neither command nor information indicative of mode to be transmitted to the video camera 20, data indicative of "no operation" are formed and transmitted.

Figure 10 is a flow chart of the program for the video camera 20, in which steps 201 to 208 are repeated sequentially. In this case, in step 208, transmission data are formed and then stored in the register until the start signal X2 arrives. Then, when the start signal X2 arrives, these data are transmitted in step 204.

The generation of the start signals X1 and X2 and the generation of the clock pulse in the control section 11, and the detection of the start signal and the generation of the clock pulse in the control section 21, may be carried out under the control of the microcomputer or by hardware which is provided independently of the microcomputer.

In the above-described embodiment, since the first period P1 of the transmission period of one block is assigned to the transmission period of the VTR 10 used as the master apparatus and the succeeding period P2 is assigned to the transmission period of the video camera 20 used as the slave apparatus, the start signals X1 and X2 are both transmitted from the VTR 10 periodically. On the contrary, if the first period P1 is assigned to the transmission period of the slave apparatus and the succeeding period P2 is assigned to the transmission period of the master apparatus, as shown in Figure 6, concerning the start signal, only the first start signal X1 is always transmitted periodically, and only when the transmission data are transmitted from the master apparatus, the second start signal X2 can be transmitted.

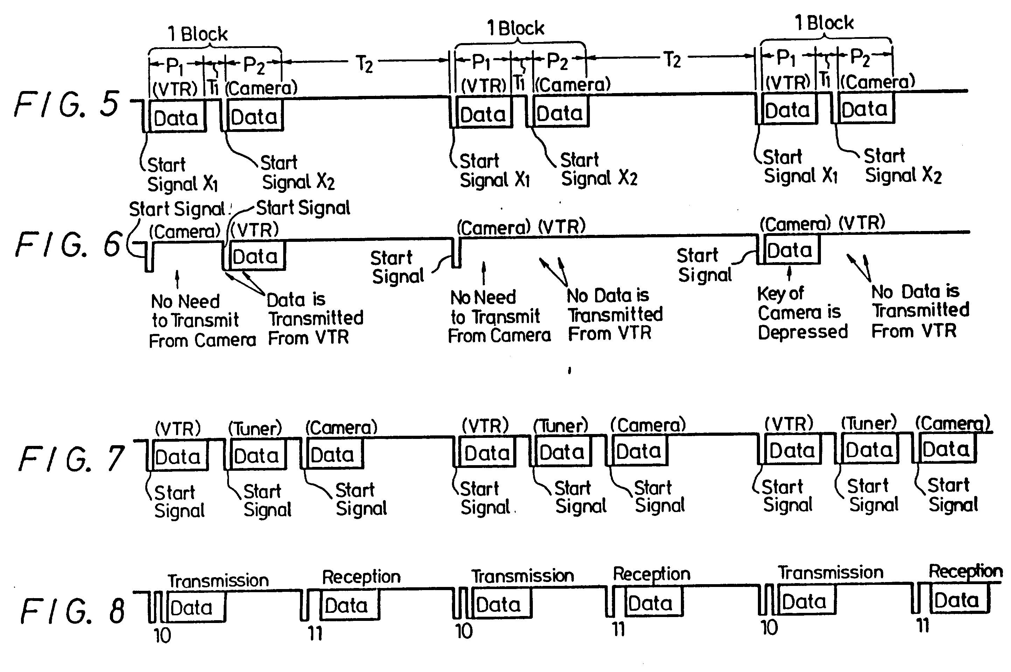

The invention can be applied to a case where there is one master apparatus and two or more slave apparatuses. For example, when the master apparatus is the VTR and the slave apparatus is a tuner and a camera, as shown in Figure 7, this can be realized by assigning the first transmission period to the VTR, the second transmission period to the tuner, and the last transmission period to the camera.

The adjacent blocks and the transmission periods P1 and P2 within one block can be discriminated from one another not only by the difference between the time periods as in the above-described example but also by inserting, as shown in Figure 8, an identifying code of "10" and an identifying code "11" before the data of the transmission period and the reception period as seen from one apparatus.

## Claims

1. A data communication apparatus in which bidirectional communication of data is carried out between a master apparatus (10) and a slave apparatus (20), the apparatus comprising:
a single communication line (30) connecting said master apparatus (10) and said slave apparatus (20);
means for arranging a first data transmission period of one apparatus (10, 20) and a second data transmission period of the other apparatus (20, 10) as one block such that said first and second data transmission periods can be discriminated from each other and said blocks can be discriminated from each other; and
means (114) for generating start signals which are transmitted from said master apparatus (10) prior to the respective starts of said first and second data transmission periods;
first and second blank periods containing only a respective said start signal preceding said first and second data transmission periods, respectively;
characterized by:
said blocks and said start signals being transmitted repeatedly and periodically, and successive said blocks being separated by respective intervals long enough for processing of transmission data and for effecting operations corresponding to said data in said master apparatus (101) and said slave apparatus (20);
a first blank period containing only a said start signal being interposed between successive said first and second data transmission periods, and a second blank period containing only a said start signal being interposed between successive said first and second blocks;
respective clock generator means (113, 212) for generating a clock signal disposed in both said master apparatus (10) and said slave apparatus (20), said clock generator means (113, 212) of both said master apparatus (10) and said slave apparatus (20) being triggered by said start signal; and
said transmitted data signals comprising only data bit signals and no said clock signal, and said first and second data transmission periods being separated from one another in said repeated and periodical transmissions whereby said slave apparatus (20) can transmit data signals spontaneously without inquiry from said master apparatus (10).

2. Apparatus according to claim 1 wherein said first and second data transmission periods are discriminated by said first and second blank periods being of unequal duration.

3. Apparatus according to claim 1 wherein said first and second data transmission periods are discriminated by prefacing said first and second periods with respective different identifying codes preceding said data.

4. Apparatus according to claim 1, claim 2 or claim 3 wherein said master apparatus (10) is a video tape recorder (10) and said slave apparatus (20) is a video camera (20).

## Patentansprüche

1. Datenkommunikationsgerät, bei dem eine bidirektionale Datenkommunikation zwischen einem Hauptgerät (10) und einem Nebengerät (20) ausgeführt wird, wobei das Gerät aufweist:
eine Einzelkommunikationsleitung (30), die das Hauptgerät (10) mit dem Nebengerät (20) verbindet;
Mittel zur Einrichtung einer ersten Datenübertragungsperiode des einen Geräts (10, 20) und einer zweiten Datenübertragungsperiode des anderen Geräts (20, 10), so als ein Block, daß die ersten und zweiten Datenübertragungsperioden voneinander unterschieden werden können und die Blöcke voneinander unterschieden werden können; und
Mittel (114) zur Erzeugung von Startsignalen, die vom Hauptgerät (10) vor den jeweiligen Starts der ersten und zweiten Datenübertragungsperioden übertragen werden;
erste und zweite Leerperioden, die jeweils nur das entsprechendes Startsignal enthalten, das den ersten und zweiten Datenübertragungsperioden vorhergeht;
**dadurch gekennzeichnet, daß**
die Blöcke und die Startsignale wiederholt und periodisch übertragen werden und aufeinanderfolgende Blöcke durch entsprechende Intervalle getrennt sind, die lang genug sind, um die Übertragungsdaten zu verarbeiten und Operationen entsprechend den Daten im Hauptgerät (101) und im Nebengerät (20) auszuführen;
eine erste Leerperiode, die nur das Startsignal enthält, zwischen den aufeinanderfolgenden ersten und zweiten Datenübertragungsperioden angeordnet ist, und eine zweite Leerperiode, die nur das Startsignal enthält, zwischen den aufeinanderfolgenden ersten und zweiten Blöcken angeordnet ist;
entsprechende Takterzeugungsmittel (113, 212) zur Erzeugung eines Taktsignals vorgesehen sind, die sowohl im Hauptgerät (10) als auch im Nebengerät (20) angeordnet sind, wobei die Takterzeugungsmittel (113, 212) vom Hauptgerät (10) und vom Nebengerät (20) durch das Startsignal getriggert werden; und
die übertragenen Datensignale nur Datenbitsignale und kein Taktsignal besitzen, und die ersten und zweiten Datenübertragungsperioden voneinander bei den wiederholten und periodischen Übertragungen getrennt sind, wodurch das Nebengerät (20) Datensignale ohne Anfrage vom Hauptgerät (10) spontan übertragen kann.

2. Gerät nach Anspruch 1, wobei die ersten und zweiten Datenübertragungsperioden durch die ersten und zweiten Leerperioden, die eine ungleiche Zeitdauer besitzen, unterscheidbar sind.

3. Gerät nach Anspruch 1, wobei die ersten und zweiten Datenübertragungsperioden durch Voranstellen vor den ersten und zweiten Perioden entsprechender unterschiedlicher Identifizierungscodes, die den Daten vorhergehen, unterscheidbar sind.

4. Gerät nach Anspruch 1, 2 oder 3, wobei das Hauptgerät (10) ein Videorekorder (10) und das Nebengerät (20) eine Videokamera (20) ist.

## Revendications

1. Système de transmission de données, dans lequel la transmission bidirectionnelle de données est effectuée entre un appareil maître (10) et un appareil esclave (20), le système comprenant:
- une unique ligne de transmission (30) reliant ledit appareil maître (10) et ledit appareil esclave (20);
- des moyens pour agencer une première période d'émission de données d'un appareil (10, 20) et une deuxième période de transmission de données de l'autre appareil (20, 10) sous la forme d'un bloc tel que lesdites première et deuxième périodes de transmission de données puissent être discriminées l'une de l'autre et lesdits blocs puissent être discriminés les uns des autres; et
- des moyens (114) pour produire des signaux de départ qui sont émis à partir dudit appareil maître (10) avant les débuts respectifs desdites première et deuxième périodes d'émission de données,
- des première et deuxièem périodes vides contenant uniquement un respectif desdits signaux de départ précédant lesdites première et deuxième périodes d'émission de données, respectivement,
caractérisé en ce que:
- lesdits blocs et lesdits signaux de départ sont émis de manière répétée et périodiquement, et les blocs successifs sont séparés par des intervalles respectifs suffisamment longs pour exécuter le traitement des données à émettre et pour effectuer des opérations correspondant auxdites données dans ledit appareil maître (101) et ledit appareil esclave (20);
- une première période vide contenant uniquement un desdits signaux de départ étant interposée entre lesdites première et deuxième périodes successives d'émission de données, et une deuxième période vide contenant uniquement un desdits signaux de départ étant interposée entre lesdits premier et deuxième blocs successifs;
- des moyens respectifs générateurs de signal d'horloge (113, 212) pour produire un signal d'horloge, disposés tant dans ledit appareil maître (10) que dans ledit appareil esclave (20), lesdits moyens générateurs de signal d'horloge (113, 212), tant dudit appareil maître (10) que dudit appareil esclave (20) étant déclenchés par ledit signal de départ; et
- lesdits signaux de données émis comprenant uniquement des signaux de binaires de données et non ledit signal d'horloge, et lesdites première et deuxième périodes d'émission étant séparées l'une de l'autre dans lesdites émissions répétées et périodiques, ce par quoi ledit appareil esclave (20) peut émettre des signaux de données spontanément sans demande dudit appareil maître (10).

2. Système selon la revendication 1, dans lequel lesdites première et deuxième périodes d'émission de données sont discriminées par le fait que lesdites première et deuxième périodes vides sont de durées inégales.

3. Système selon la revendication 1, dans lequel lesdites première et deuxième périodes d'émission de données sont discriminées en faisant précéder lesdites première et deuxième périodes de codes d'identification respectifs différents précédant lesdites données.

4. Système selon la revendication 1, la revendication 2 ou la revendication 3, dans lequel ledit appareil maître (10) est un magnétoscope (10) et ledit appareil esclave (20) est une caméra vidéo (20).
